# EUROPEAN PATENT APPLICATION

(11) **EP 3 713 119 A1**
(43) Date of publication of application: **23.09.2020**
(21) Application number: 20172776.5
(22) Date of filing: 30.11.2016
(51) Int. Cl.: H04L 1/00

(54) **FLEXIBLE FEC DECODER FOR HIGH SPEED WDM TRANSMISSION**

(62) Divisional of application: 16306590.7
(71) Applicant: Alcatel Lucent, 91620 Nozay (FR)
(72) Inventor: CATTANEO, Davide, 20871 Vimercate, MB (IT); RAZZETTI, Luca, 20871 Vimercate, MB (IT); GAVIOLI, Giancarlo, 20871 Vimercate, MB (IT); COSTANTINI, Carlo, 20871 Vimercate, MB (IT)
(74) Representative: DREISS Patentanwälte PartG mbB

(57) **Abstract**

A forward error correction decoder to receive data transmitted through a channel of a transmission system, the decoder comprising: a decoding stage including a plurality of decoding units arranged in parallel, each of the decoding units configured to: receive a data block encoded using a forward error correction code; and process the received data block using an iterative forward error correction decoding procedure, each of the decoding units being able to apply a variable number of decoding iterations to process individual data blocks; and
a scheduler configured to select one of the decoding units from the plurality of decoding units for receiving and processing a new data block, and to issue a processing request to the selected one of the decoding units.

## Description

### Technical Field

This application relates to a Forward Error Correction (FEC) decoding method and device for use in the field of telecommunications, particularly for a network element of a Wavelength Division Multiplexing (WDM) communication network.

### Background

In Wavelength Division Multiplexing (WDM) systems, as the client bit rate increases (e.g. moving from 10Gbps to 100Gbps to 400/500Gbps), Forward Error Correction (FEC) schemes of increasing complexity are required, and thus power consumption of this part of a transmission system (e.g. FEC decoders) in silicon devices becomes a challenge and may even compromise feasibility of next-generation devices. Furthermore, for requirements of compatibility, the same FEC scheme has to be employed in short haul, long haul and ultra-long haul transmission systems where performance and processing power requirements at a design level are significantly different. For such applications, an FEC decoder architecture with low power consumption as well as capable of adapting to different system performance requirements by trading off processing power versus error correction capabilities (i.e. coding gain) is required.

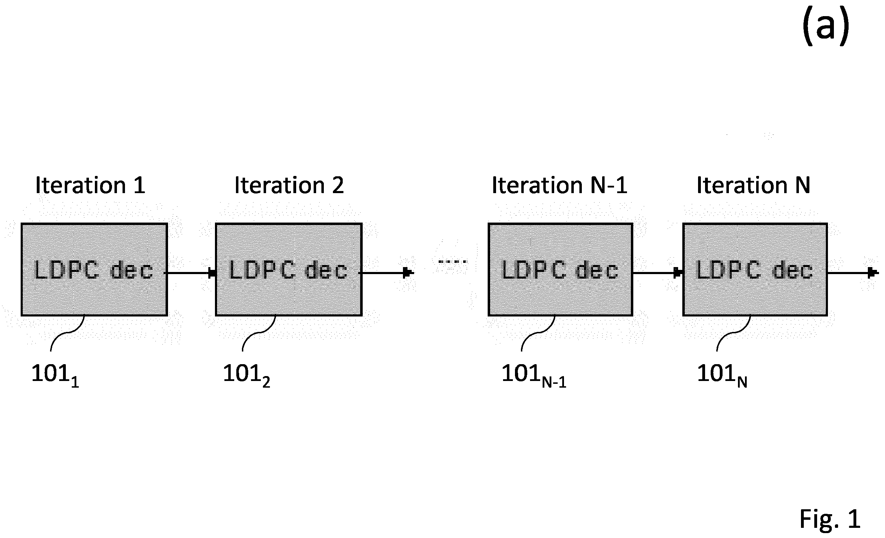

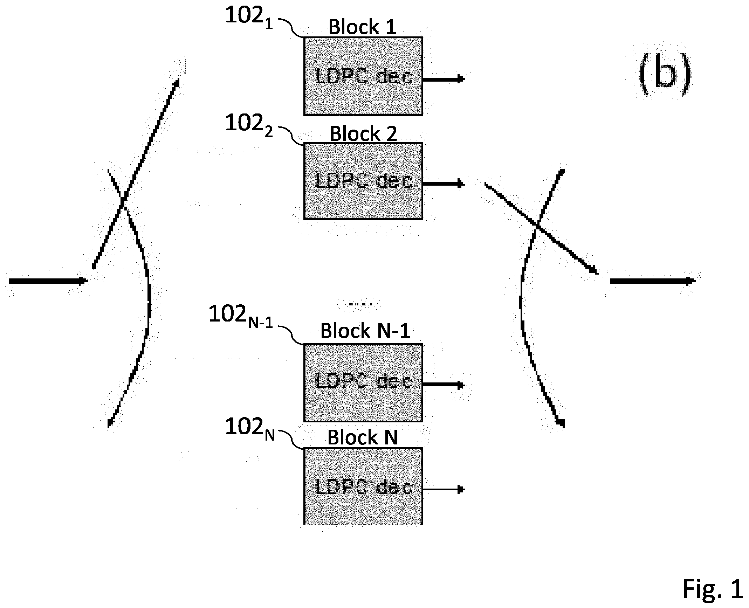

Block codes for WDM systems proposed by current state of the art are, for example, low-density-parity-check (LDPC) codes. These codes are usually decoded through an iterative process, where a code block of information is sent to a LDPC decoder and the decoding process is repeated for a variable number of iterations to ensure convergence to a desired bit error rate BER target at a certain signal-to noise ratio (SNR) value. In general, this decoding scheme can be implemented using serial or parallel architecture, as illustrated in **Fig. 1(a)** and **(b)****.** **Fig. 1(a)** shows a serial implementation of LDPC decoding, where each LDPC decoder **101₁, 101₂, ..., 101_{N}** operates on a different information block at a certain point in time. While information blocks are shifted towards the right side, they undergo iterations from 1 to N. **Fig. 1(b)** shows a parallel implementation of LDPC decoding, where each LDPC decoder **102₁, 102₂, ..., 102_{N}** receives an information block at different times. The received information block remains in the same LDPC decoder until all N iterations are performed, and then the block is output from the decoder. Similar requirements exist in other types of transmission systems where iterative processing of information blocks is performed.

Recently, a flexible decoder architecture capable of reducing the number of cascaded processors was proposed (publication of EP patent application EP 2 819 310 A1), as shown in **Fig. 2****.** Referring to **Fig. 2****,** the decoder includes a number of N cascaded processors **201** implemented for processing all information blocks, also called data blocks, and a flexible processor **202.** Each of the cascaded processors **201** performs one single decoding iteration. The flexible processor **202** is used to perform a flexible number of iterations for an information block that requires further iterations. The flexible decoder architecture also includes a "Good Guys Queue (GGQ)" **203** and a "Bad Guys Queue (BGQ)" **204.** This solution is based on the observation that only a low number of iterations is typically necessary to decode most information blocks for specific classes of FEC codes, while only very few blocks require an exceptionally high number of iterations. The decoder is managed by a scheduling algorithm **205** which works as follows:
1) If an information block is corrected by the first N processors **201,** then the block is stored in the GGQ **203,** and simply waits to be output by the decoder at the right time preserving the transmission order of information blocks.
2) If an information block still contains errors after being processed in the first N processors, then the block is sent to the BGQ **204** for further elaboration. At the same time, a "gap" remains in a relevant slot position in the GGQ **203**.
3) The flexible processor receiving information blocks from the BGQ **204** performs several iterations on the same information block until such block is fully corrected, and then this block is inserted at the right slot position (i.e. one of the gaps) in the GGQ **203** to be output at the right time.

By passing only the information blocks which require more iterations to the flexible processor instead of passing all the information blocks to each of the processors, the overall number of processing in the decoder can be reduced. However, a drawback of such decoder architecture is that, due to the serial configuration, each code (information) block is subject to a minimum number of iterations defined by the N cascaded processors **201,** even if these iterations are not always required, especially when applying to transmission systems operating at higher SNR values, such as Metropolitan Networks where reduced FEC performance (coding gain) is sufficient.

Accordingly, there is a need to reduce decoding processing to minimize power consumption as well as to provide a flexible decoding scheme that can be adapted to varying channel conditions.

### Summary

The present document proposes a new decoding scheme for a network element (e.g. a receiver) in a communication network. In particular, the present document discloses devices and methods having the features of the respective independent claims for decoding received data using a forward error correction technique.

An aspect of the disclosure relates to a forward error correction (FEC) decoder. The decoder comprises a decoding stage and a scheduler. The decoding stage comprises a plurality of decoding units arranged in parallel. The decoding stage is configured to receive data which has been transmitted through a channel of a transmission system, for example, an optical link. The received data may be channel bits as received from the transmission channel and may be soft bits (e.g. having a value from a continuous range such as [0;1]) before binary decoding. The received data may comprise a plurality of data blocks.

In general, a decoding unit of the decoding stage may be configured to process a subsequent data block after processing a current data block. In particular, a decoding unit is configured to receive a data block which may be encoded using a forward error correction code. The decoding unit may be configured to process the data block using a forward error correction decoding procedure, for example, an iterative forward error correction decoding procedure which has one or more iterations. The decoding units may each comprise a processor to perform the decoding procedure and a memory to store at least a data block. A decoding unit may apply a variable number of decoding iterations on the data block and hold the result of the processed data block in its memory.

In some embodiments, the iterative forward error correction code may comprise a low-density-parity-check (LDPC) code. In principle, the proposed method can be applied to all iterative error correction codes that require a variable effort, in particular if a detection mechanism exists for signaling that the error correction process is completed.

After finishing processing a data block, the decoding unit may not immediately output the processed data block but may keep the processing result in its memory. The decoding unit may be configured to output the processed data block only upon receiving a request to process a new data block. For example, a decoding unit may be informed (e.g. by a signal from the scheduler) to receive and process a new data block.

Furthermore, the decoder may also comprise a reassembly queue configured to receive a data block output from a decoding unit for reassembling the data block order before the data blocks are output from the decoder. The reassembly queue comprises a memory with a FIFO-like structure of data slots for storing data blocks. Thus, the memory may be partitioned in a plurality of same size data slots, each data slot for storing a data block. For example, the reassembly queue comprises a number of ordered slots for reassembling the data block order after the variable length processing by the decoding units where variable numbers of iterations are applied to the individual blocks. For managing the reassembly queue, a write pointer and a read pointer are maintained. The write pointer points to the slot position where a data block is to be inserted. The read pointer identifies the next data block that is to be output from the decoder. At each time period, a read and a write operation can be performed on the reassembly queue. In this way, the reassembly queue restores the initial block order. For example, a data block which is output by a decoding unit to a slot closer to the output of the reassembly queue (because it stayed longer in the decoding unit) will be output from the decoder earlier than other data blocks which did not stay that long in a decoding unit and have been inserted in the reassembly queue farther from the output.

According to the disclosure, the scheduler is configured to select a target decoding unit from the plurality of decoding units for receiving and processing a new data block received by the decoder. At that time, the target decoding unit may be configured to process a current data block. The scheduler may also be configured to issue a processing request to the selected target decoding unit, for example, for receiving and processing the new data block. Subsequently, the target decoding unit may be configured to output the previously processed data block (e.g. the current data block) prior to receiving the new data block. In particular, the selected target decoding unit may be configured to output the processed data block to the reassembly queue upon receiving the processing request from the scheduler. Since only one decoding unit is selected at a time, only the selected target decoding unit sends output (a data block) to the reassembly queue so that conflicts on a data bus connecting the decoding units with the reassembly queue and while accessing the memory of the reassembly queue are avoided.

In detail, the scheduler may be configured to select the target decoding unit based on an arrival time of a corresponding previously-received data block processed by the decoding units. In some embodiments, the scheduler may be configured to determine a time-out condition of a decoding unit based on the arrival time of a corresponding previously-received data block in the decoding unit. More specifically, the time-out condition of a decoding unit may be determined based on the arrival time of a corresponding previously-received data block in the decoding unit. The time-out condition of a decoding unit may be determined also based on the number of iterations of the forward error correction decoding procedure already performed by the decoding unit. Further, the determination of the time-out condition of a decoding unit may be based on an allowed total decoder latency.

The number of slots in the reassembly queue may also correspond to the allowed total decoder latency to allow recovering the order of the data blocks in a time window of a size corresponding to the allowed total decoder latency. In other words, the received data blocks stay within the total decoder latency time within the decoder before being output. Due to the variable number of iterations that are necessary for a block to correct its errors, the block spends a first variable time in a decoding unit and is then inserted at a respective position in the reassembly queue to wait for a second variable time to be output at the right moment corresponding to its position in the block sequence, wherein the sum of the first and second variable times correspond to the total decoder latency.

At each time period, the scheduler selects a decoding unit. In response, the selected decoding unit sends the previously processed data block to the reassembly queue. Then, the selected unit accepts a new block and starts processing it. The scheduler selection of a decoding unit may be based on the scheduler rules presented in this document.

At each time period, all the decoding units having completed the decoding process may be set in low power mode. The low power mode ends when a decoding unit is selected again. Thus, all decoding units not actively processing a data block are in low power mode so that the power consumption of the decoder is reduced.

According to some embodiments, the scheduler may be configured to identify a decoding unit as a time-out decoding unit in case the corresponding previously-received data block in the decoding unit reaches a time-out condition. In particular, the scheduler may be further configured to select the time-out decoding unit as the target decoding unit. Accordingly, the scheduler may be configured to cause the corresponding previously-received data block of the time-out decoding unit to be output to the reassembly queue. This is because the time-out decoding unit has already been keeping the corresponding previously-received data block for a maximum time (e.g. depending on the number of iterations) for which the corresponding previously-received data block is allowed to stay in a decoding unit, and the corresponding previously-received data block is therefore preferably to be output to a slot close to the output of the reassembly queue to remain the output order of data blocks the same as the current transmission order of the data blocks. Moreover, the scheduler may be configured to select the target decoding unit based on an operating status of the decoding units. For example, the operating status of the decoding units may comprise a working mode and an idle mode. The decoding units may send signals indicative of their operating status to the scheduler. Alternatively, the decoding units may inform the scheduler about their status by maintaining a semaphore or using any other mechanism to share information. A decoding unit that has finished processing of a data block holds the processing result in its internal memory and goes into idle mode. In detail, a decoding unit initially being in the idle mode may switch to the working mode after it has been selected as the target decoding unit to process the data block. Alternatively, a decoding unit being in the working mode may switch to the idle mode after the processing of the data block is completed and errors of the data block are corrected. In case the number of available decoding units is much larger than the required number of decoding units for a certain noise level, e.g. for a clean channel having a higher signal-to-noise ratio (SNR) value, a decoding unit may be in the idle mode for a longer time than in the working mode. On the other hand, a decoding unit may be in the working mode for a longer time than in the idle mode in case the number of available decoding units is about the same or smaller than the required number of decoding units for a certain noise level, e.g. for a noisy channel having a lower SNR value.

According to some embodiments, in case the corresponding previously-received data block in each decoding unit does not reach the time-out condition, the scheduler may be further configured to select a decoding unit being in the idle mode as the target decoding unit. Accordingly, the scheduler may be configured to cause the corresponding previously-received data block of the selected decoding unit (e.g. an idle decoding unit) to be output to the reassembly queue. According to some embodiments, in case the corresponding previously-received data block in each decoding unit does not reach the time-out condition and all decoding units are in the working mode (no idle decoding unit), the scheduler may be further configured to select a decoding unit being in the working mode as the target decoding unit. Accordingly, the scheduler may be configured to cause the corresponding previously-received data block of the selected decoding unit (e.g. a working decoding unit) to be output to the reassembly queue irrespective of whether the processing of the data block is finished. For example, a decoding unit in the working mode may be selected that has been working on a same data block for longer time than other decoding units (e.g. other working decoding units). In other words, the decoding unit having performed the most iterations on a data block is selected as target decoding unit.

According to the disclosure, the scheduler may be further configured to assign, prior to the previously-received data block output from the target decoding unit to the reassembly queue, a position in the reassembly queue for storing a previously-received data block. Alternatively, the scheduler may be further configured to, prior to the processed data block output to the reassembly queue, assign a position in the reassembly queue for storing the processed data block. According to some embodiments, the position of a data block may be assigned based on the time for which the data block has stayed in a decoding unit (e.g. the number of iterations). For example, a data block which has stayed longer in a decoding unit may be assigned to a position close to the output end (e.g. the right side) of the reassembly queue so as to keep the current transmission order of data blocks.

In some embodiments, the scheduler may be configured to select a free decoding unit as the target decoding unit for receiving and processing a data block at an initial stage. For example, in case of a clean channel, a free decoding unit which after start-up has not yet received or processed any data block may be preferably selected as the target decoding unit at the initial stage than a decoding unit which may still keep a data block in the idle mode after processing the data block.

Configured as above, by keeping the processed data block in a decoding unit until receiving a processing request for a new data block, processing requirements (e.g. time, power) in a decoder can be significantly reduced, especially for specific FEC decoders which need only a low number of iterations to decode most information blocks and a higher number of iterations for only very few exceptional blocks. This advantage is beneficial to dynamic channel conditions where the noise level changes very quickly and the requirement for FEC decoding needs to be adapted properly. In embodiments, the number of decoding units available for selection by the scheduler may be adapted based on a moving average of the number of active decoding units, thereby further improving the dynamic behavior of the decoding scheme and avoiding excessive power consumption in cases of low SNR.

As such, the proposed decoding scheme drastically reduces the complexity (e.g. the required silicon area) and power consumption for the implementation of a high speed FEC decoder. Also, the proposed decoding scheme makes it feasible to optimize the number of processors in the working mode (i.e. active iterators) around a target coding gain so as to trade off processing power for applications where reduced FEC performances are required. In view of this, the proposed decoding scheme provides an enhanced flexibility that can be adapted to varying channel conditions, e.g. for various SNR values. The proposed decoder may be implemented on an ASIC where the reduced power consumption advantageously reduces the production of heat and therefore facilities heat dissipation and allows higher densities. According to the proposed decoding scheme, an idle decoding unit in an ASIC has e.g. no memory activities and consumes only very low power so that the temperature of the chip is reduced.

Another aspect of the disclosure relates to a decoding method for implementing forward error correction to the received data which has been transmitted through a channel, for example, an optical link. The received data may comprise a plurality of data blocks. The decoding method may be implemented by a decoder as mentioned above (e.g. a FEC decoder in parallel configuration). The method comprises receiving a data block at a decoding unit of a plurality of decoding units arranged in parallel. The data block may be encoded using a forward error correction code. The method also comprises processing, at the decoding unit, the data block using a forward error correction decoding procedure, for example, an iterative forward error correction decoding procedure which has one or more iterations. In some embodiments, the iterative forward error correction code may comprise a low-density-parity-check (LDPC) code. The decoding unit may keep the result of the forward error correction decoding procedure in its memory and enter an idle state.

In general, a decoding unit of the plurality of decoding units can process a subsequent data block after finishing processing a current data block or when the processing is aborted. According to the disclosure, the data block may not immediately be output by the decoding unit after being processed. Rather, the method comprises outputting the processed data block from the decoding unit upon receiving a request to process a new data block. For example, the method may comprise informing (e.g. through a scheduler) the decoding unit to receive and process a new data block. In some embodiments, the data block may be processed and output prior to receiving the new data block. Furthermore, the method may comprise receiving a data block output from a decoding unit at a reassembly queue.

According to the disclosure, the method further comprises, e.g. by the scheduler, selecting a target decoding unit from the plurality of decoding units for receiving and processing a new data block. The method also comprises issuing a processing request to the selected target decoding unit, for example, for receiving and processing a new data block. Subsequently, the method may comprise outputting the processed data block (e.g. the current data block) at the target decoding unit prior to receiving the new data block. In particular, the method may comprise outputting the processed data block to the reassembly queue upon receiving the processing request.

In detail, the target decoding unit may be selected based on an arrival time of a corresponding previously-received data block in the decoding units. In some embodiments, the method may also comprise determining a time-out condition of a decoding unit based on the arrival time of a corresponding previously-received data block in the decoding units. More specifically, the time-out condition of a decoding unit may be determined based on the arrival time of a corresponding previously-received data block in the decoding unit. The time-out condition of a decoding unit may be determined also based on the number of iterations of the forward error correction decoding procedure performed by the decoding unit. Further, the determination of the time-out condition of a decoding unit may be based on an allowed total decoder latency.

According to some embodiments, a decoding unit may be identified as a time-out decoding unit in case the corresponding previously-received data block in the decoding unit reaches a time-out condition. In this case, the method may further comprise selecting the time-out decoding unit as the target decoding unit. Also, the method may comprise causing the corresponding previously-received data block of the time-out decoding unit to be output to the reassembly queue.

Moreover, the target decoding unit may be selected based on an operating status of the decoding units, e.g. a working mode and an idle mode. As mentioned above, a decoding unit being in the idle mode may start to operate in the working mode after it has been selected as the target decoding unit to process the data block. Alternatively, a decoding unit being in the working mode may start to operate in the idle mode after the processing of the data block is completed and errors of the data block are corrected.

According to some embodiments, in case the corresponding previously-received data block in each decoding unit does not reach the time-out condition, the method may further comprise selecting a decoding unit being in the idle mode as the target decoding unit. Accordingly, the method may comprise causing the corresponding previously-received data block of the selected decoding unit to be output to the reassembly queue. According to some embodiments, in case the corresponding previously-received data block in each decoding unit does not reach the time-out condition and all decoding units are in the working mode, the method may further comprise selecting a decoding unit being in the working mode as the target decoding unit. Accordingly, the method may comprise causing the corresponding previously-received data block of the selected decoding unit to be output to the reassembly queue. For example, a decoding unit in the working mode may be selected that has been working on a same data block for longer time than other decoding units.

According to the disclosure, the method may further comprise, prior to outputting the previously-received data block from the target decoding unit to the reassembly queue, assigning a slot position in the reassembly queue for storing a previously-received data block. Alternatively, the method may further comprise, prior to outputting the processed data block to the reassembly queue, assigning a slot position in the reassembly queue for storing the processed data block. According to some embodiments, the slot position of a data block may be assigned based on the time for which the data block has stayed in a decoding unit. For example, a data block which has stayed longer in a decoding unit may be assigned to a slot position close to the output end (e.g. the right side) of the reassembly queue so as to keep the transmission order of data blocks.

In some embodiments, the method may also comprise receiving and processing the data block at a free decoding unit at an initial stage. For example, in case of a clean channel, a free decoding unit which has not yet received or processed any data block may be preferably selected as the target decoding unit at the initial stage than a decoding unit which may still keep a data block in the idle mode after processing the data block.

Configured as above, the processed data block may stay in a decoding unit for a while until the decoding unit receives a processing request for a new data block, which can significantly reduce processing in a decoder. As a result, the processing complexity and therefore the power consumption of a high-speed FEC decoder can be scaled down accordingly.

Moreover, the proposed decoding method provides a flexible FEC decoding scheme which optimizes the number of working processors for a certain coding gain. This is beneficial in case only fewer data blocks need a large number of iterations but most data blocks require only a small number of iterations, for example, for transmissions via a low-noise channel or a noise-varying channel. Thus, the processing power can be traded-off using the proposed method as long as reduced FEC performances are sufficient, which leads to lower overall decoder power consumption.

The above presented decoder and decoding methods may be implemented in a coherent receiver for optical data communications. For example, the receiver may be employed in a WDM communication network, but is not restricted to WDM and can be applied in other optical transmission networks. Moreover, the decoder and decoding methods may be used in other receivers for wireless or wireline transmission system where iterative decoding is applicable.

Implementations of the devices may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed device can be implemented as a method and vice versa, as the skilled person will appreciate.

### Brief Description of the Figures

Some embodiments of apparatus and/or methods in accordance with embodiments of the present invention are now described, by way of example only, and with reference to the accompanying drawings, in which:
**Fig. 1(a)** schematically illustrates a serial implementation of LDPC decoding;
**Fig. 1(b)** schematically illustrates a parallel implementation of LDPC decoding;

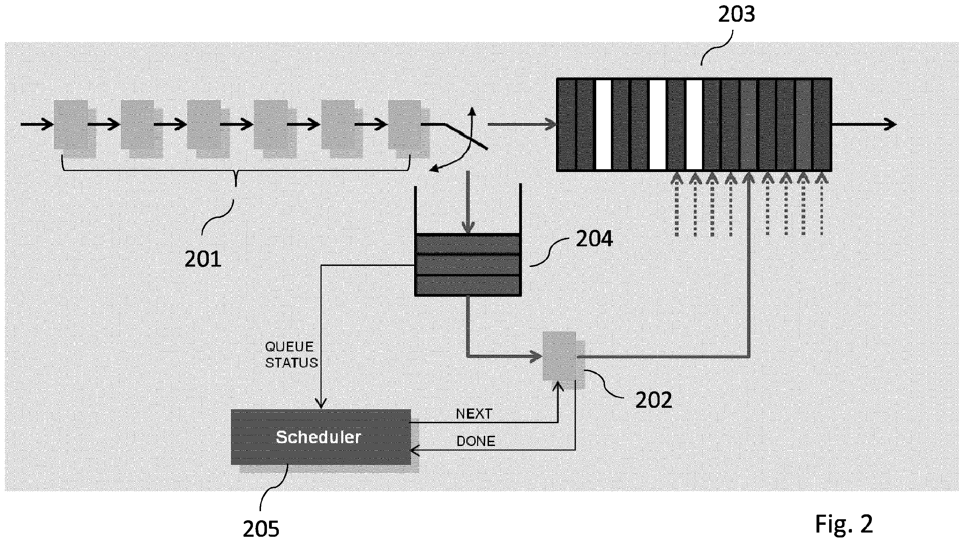

**Fig. 2** schematically illustrates a serial-parallel flexible decoder architecture;
**Fig. 3** schematically illustrates a proposed flexible decoder architecture according to embodiments of the disclosure;
**Fig. 4** schematically illustrates processing steps for the proposed decoding method according to embodiments of the disclosure;
**Fig. 5** graphically illustrates a histogram showing fraction of corrected data blocks versus number of required iterations for the LDPC code under consideration; and
**Fig. 6** graphically illustrates a simulation result of the average number of working processors as a function of SNR using the proposed decoder architecture according to embodiments of the disclosure.

### Detailed Description

A basic aspect of this disclosure relates to decoding devices and methods for use in a network element of a communication network, such as a receiver, particularly for performing forward error correction (FEC) decoding in high-speed optical communication systems (e.g. Wavelength Division Multiplexing WDM systems).

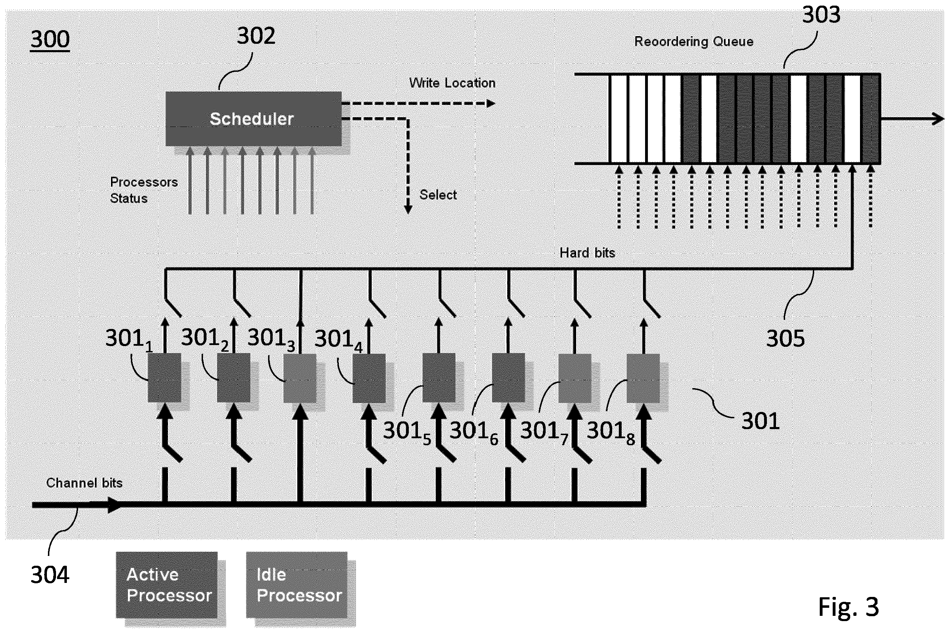

**Fig. 3** is a schematic illustration of a proposed decoder architecture according to embodiments of the disclosure. As illustrated, the proposed decoder architecture (decoder) **300** has a flexible parallel configuration. The proposed flexible parallel decoder **300** includes a decoding stage **301,** a scheduler **302** and a reassembly queue **303.** The decoding stage **301** comprises a number of decoding units (e.g. processors) **301₁, ..., 301₈** which work in parallel sharing an ingress and egress bus line **304, 305.** As mentioned above, the decoding stage **301** receives data which has been transmitted through a channel, for example, an optical link. The received data comprises a plurality of data blocks which are encoded using a FEC code. For example, the data blocks are encoded using an iterative FEC code. In an embodiment, the iterative FEC code can be a low-density-parity-check (LDPC) code and the data blocks are encoded using the LDPC code. In some embodiments, the data blocks can be encoded using other kinds of iterative FEC codes. Accordingly, the decoding units **301₁,** ..., **301₈** process the data blocks using an iterative FEC decoding procedure which has one or more iterations, e.g. the LDPC decoding procedure or other iterative decoding procedures.

After the processing, the decoding units **301₁,** ..., **301₈** output the processed data blocks to the reassembly queue **303.** The reassembly queue **303** stores the processed data blocks received from the decoding units **301₁,** ..., **301₈** of the decoding stage **301** to keep the processed data in the transmission order of the data blocks (therefore the reassembly queue **303** also functions as a reordering queue). In other words, the reordering/reassembly queue **303** guarantees that the order of the data blocks is preserved. Following this rule, a block needing a high number of iterations and thus staying at a decoding unit/processor for a long time will wait less in the reordering queue **303.** In general, the time which a data block spends in the reassembly memory **303** is complementary to the time which the block spends in a decoding unit/processor.

It is noted that the decoding units **301₁,** ..., **301₈** may not immediately output the processed data blocks after they have finished the processing of data blocks. According to the disclosure, a decoding unit outputs a processed data block upon receiving a request to process a new data block. Moreover, the processing mechanism is paced with the arrival period of the code blocks (data blocks), also corresponding to the time required for one iteration. To achieve this, the scheduler **302** selects a target decoding unit from the decoding units **301₁,** ..., **301₈** for receiving and processing a new data block. The scheduler **302** also issue a processing request to the selected target decoding unit so that the selected target decoding unit is informed to be ready to receive the new data block. One skilled in the art will appreciate that, although the decoding stage **301** includes eight decoding units **301₁,** ..., **301₈** in the embodiment of **Fig. 3****,** any number of decoding units can be included in the decoding stage **301** in the disclosed parallel configuration.

Referring to **Fig. 3****,** at each time slot, a new data block arrives and reaches one of the processors, for example, the decoding unit **301₃,** after the decoding unit **301₃** has been selected as the target decoding unit. Simultaneously, a previously-received block is released from the same processor (i.e. the decoding unit **301₃**) and is transferred to the reassembly (reordering) queue **303.** In other words, a new data block pushes off an older data block from the selected processor (e.g. the decoding unit **301₃**). Moreover, a data block may stay at its processor/decoding unit until the same processor/decoding unit may be selected again. In another situation, one of the other processors in the decoding stage **301** may be selected based on the selection criteria which will be mentioned in detail in the following.

During the correction process in a decoding unit/processor, it is continuously verified if the errors in a data block are completely removed or corrected. For example, a decoding units/processors may check whether the corresponding error correcting procedure is completed and the data block thereof is error-free. In that case, the decoding unit/processor stops working (i.e. being put in a sleep or low power condition which is called idle mode) while keeping the corrected data block in memory, and waiting to be selected again. The fraction of time during which a processor/decoding unit stays in the idle mode contributes to power saving. In general, a low BER value obtained in case of a clean channel (low SNR value) results in low processing requirements with most of the processors/decoding units being put in the sleep or low-power condition. In other words, by putting the decoding units which have completed the error correction procedure in the sleep or low-power condition until receiving a request for a new data block, instead of immediately outputting the corrected data block and receiving a new data block, the overall processing in the decoder can be saved, thereby reducing overall power consumption of the decoder.

As mentioned above, the scheduler **302** is responsible for the selection of the target processor/decoding unit. The scheduler **302** keeps track of the arrival time of each stored block and is informed about the status of each processor/decoding unit (e.g. working/idle mode). In the embodiment, the decoding unit selection obeys to the following scheduler rules:
1. If a data block reaches the time-out condition, it is released and its processor will be selected. As only one data block can be in time-out condition at a certain time instance to allow only one data block to be output from the reassembly memory **303** of the decoder at the time instance such that data blocks do not conflict with each other, the time-out data block is to be written on the rightmost entry of the reassembly memory **303.**
2. Else, select a processor/decoding unit in the sleep condition. Any of the processors/decoding units in the sleep condition can be selected.
3. Else, select a working processor/decoding unit. Any of the working processor can be selected, however the working processor/decoding unit which has been working on the same data block for longer time is preferably selected, because that data block may not be correctable or will soon reach the time-out condition, which may happen when the channel errors exceed the code capability.

According to the above mentioned rule, the scheduler **302** selects the target decoding unit based on an arrival time of a corresponding previously-received data block in the decoding units. The scheduler **302** determines a time-out condition of a decoding unit based on the arrival time of a corresponding previously-received data block in the decoding unit. More specifically, the time-out condition of a decoding unit is determined based on the arrival time of a corresponding previously-received data block in the decoding unit, the number of iterations of the forward error correction decoding procedure performed by the decoding unit and an allowed total decoder latency. In particular, the scheduler **302** identifies a decoding unit as a time-out decoding unit in case the corresponding previously-received data block in the decoding unit reaches a time-out condition. Accordingly, the scheduler **302** selects the time-out decoding unit as the target decoding unit and causes the corresponding previously-received data block of the time-out decoding unit to be output to the reassembly queue **303.**

Moreover, the scheduler **302** selects the target decoding unit based on an operating status of the decoding units (e.g. a working mode and an idle mode such as a sleeping mode and a low-power mode). As mentioned above, the operating status of a decoding unit can change depending on whether the decoding unit is or will be processing a data block. For example, a decoding unit being in the idle mode switches to the working mode after it has been selected as the target decoding unit to process the data block, while a decoding unit being in the working mode switches to the idle mode after the processing of the data block is completed and errors of the data block are corrected.

In general, a decoding unit operates in the idle mode for a longer time than in the working mode in case of a large number of available decoding units applied for a clean channel providing a higher SNR value. On the other hand, a decoding unit operates in the working mode for a longer time than in the idle mode in case of a small number of available decoding units applied for a noisy channel providing a lower SNR value. In general, the processing time (when the decoding unit is in the working mode) required for a block (e.g. the number of iterations) depends on the number of errors in the data block (thus, e.g. on the SNR of the transmission channel). However, since a decoding unit is not immediately freed when ready with processing a data block, it stays in idle mode until it is selected as target decoding unit for a new data block, and keeps the already processed data block in its memory before outputting the processing result to the reassembly queue. Thus, the idle time of a decoding unit depends on the available system resources (e.g. number of decoding units) and the system load and requirements (e.g. the bit error rate of the received data blocks as determined by the SNR of the transmission channel and the required residual bit error rate at the decoder output).

In case the corresponding previously-received data block in each decoding unit does not reach the time-out condition, the scheduler **302** selects a decoding unit being in the idle mode as the target decoding unit. Accordingly, the scheduler **302** causes the corresponding previously-received data block of the selected decoding unit to be output to the reassembly queue **303.** In case the corresponding previously-received data block in each decoding unit does not reach the time-out condition and all decoding units are in the working mode, the scheduler **302** selects a decoding unit being in the working mode as the target decoding unit. Accordingly, the scheduler **302** causes the corresponding previously-received data block of the selected decoding unit to be output to the reassembly queue **303.** As indicated, a decoding unit in the working mode that has been working on a same data block for longer time than other decoding units is preferably selected.

For example, at time t = tₒ, a data block enters the decoder **300** and is assigned to a selected processor. At the selected processor, the data block is processed for x iterations, i.e. x time slots, with 1 ≤ x < T where T is the maximum decoder latency. After x iterations, i.e. at t = tₒ +x, all errors in the data block are corrected and the data block is kept in the same processor (i.e. the selected processor) which then operates in the sleeping mode for y time slots, with 0 ≤ y < T-x. Subsequently, at t = tₒ + x + y, the data block is released by the selected processor and is output to the reordering queue **303.** It is noted that for each data block, a period of time for which a data block can stay in a processor is determined based on the decoder latency T, that is, at t = tₒ + T, the code (data) block must exit the decoder. In general, the decoder latency T is a constant value. Thus, knowing an arrival time of a data block, the scheduler **302** can determine whether the data block reaches a time-out condition (i.e. the data block is going to be output from the decoder) and further identifies the data block as a time-out decoding unit/processor to be selected as the target decoding unit/processor. Also, since T is a constant value, the time y for which a decoding unit/processor keeps a data block in the idle mode decreases with increasing time x for which the decoding unit/processor processes (corrects) the data block in the working mode. In general, the time x increases with the number of iterations required for the correction process performed by a decoding unit/processor.

At time t = tₒ + x + y + (T - x - y) = tₒ + T the block exits the system. The quantity (T - x - y) is the time spent by the block in the reassembly queue. This guarantees constant latency (= T) and no overtakes between blocks.

However, a data block may be output from a decoding unit/processor before reaching the time-out condition. As mentioned above, the time y for which a decoding unit/processor keeps a data block in the idle mode can be smaller than T-x, i.e. the maximum remaining time allowed for the data block to stay in the processor. This may be the case when the transmission channel has a high SNR value (less noisy) so that only very few iterations are needed for correcting a data block. In this case, a data block may enter the decoder when all processors are in the idle mode. The scheduler **302** may select any one of the idle processors as the target decoding unit or, alternatively, select an idle processor which has been keeping its data block for longer time than other idle processors. On the contrary, in case the transmission channel has a low SNR value (i.e. a noisy channel) so that a large number of iterations are required for correcting a data block, a working processor may be selected as the target decoding unit before completing the correction process for its data block, and the data block output from the working processor may still contains some uncorrected errors.

Moreover, at an initial stage of the decoding process, the scheduler **302** may select a free processor, if there is any, as the target decoding unit for receiving and processing a data block, even though there are also other processors operating in the idle mode. For example, in case of a clean channel (high SNR), a free processor which has not yet received or processed any data block may be preferably selected as the target decoding unit at the initial stage than a processor which may still keep a data block in the idle mode after processing the data block.

Also, prior to outputting a (processed) data block from the target decoding unit to the reassembly (reordering) queue **303,** the scheduler **302** assigns a position in the reassembly queue **303** for storing the data block. Preferably, the position of a data block may be assigned based on the time for which the data block has stayed in a processor. For example, a data block which has stayed longer in a processor may be assigned to a location closer to the output end (e.g. the right side) of the reassembly queue **303** so as to keep the transmission order of data blocks.

In the following, an example for implementing the reassembling queue memory mechanism is provided. The reassembling queue may be implemented as a memory with L locations, numbered from 0 to L-1. L should be higher than the total decoder latency (T) of the system, L > T. For instance, the number of memory locations could be L = 64 time slots, with a time slot corresponding to the transmission time for a data block.

A counter is maintained by the system, incremented by one every time slot, up to L-1 and then repeated forever: counter = 0, 1, 2, .., L-1, 0, 1, 2, .., L-1, 0, 1, 2, .., L-1,0 ...

At each time slot, a data block arrives and the current value of the counter is assigned to the data block (like picking a number from a ticket wheel). This number, call it A, will be the location in the reassembling memory in which the data block will be sooner or later written in. No matter how long the block is processed in a decoding unit, no matter how long the block is kept by the decoding unit in idle mode, the processed block will be stored in location A of the reassembling memory.

At each time slot the location number (counter - T) (T being the fixed latency of the system) is read from the memory and its content (the data block arrived T slots before) is sent out from the system. Note: the operations here are modular: 'counter - T' is substituted by 'counter-T + L' if counter<T.

As a particular case, the block that has assigned the value 'A' will reach the timeout condition if it is still in its decoding unit when: counter - T - 1 = A. In this case, its decoding unit must be selected (first rule of the scheduler) and the block must be written in the location A of the reassembling memory, because the following time slot it will be read and sent out, (it will stay in the reassembling memory only for one time slot).

In brief, the block is assigned the number A (the current counter value). After being processed it will be written in the location A of the reassembling memory. The block will exit the reassembling memory when: counter - T = A, i.e. T slots after, so the sequence of blocks is preserved, no overtakes.

The time instant at which the block exits a decoding unit and enters the reassembling memory depends on the decoding effort that the decoding unit spends on it (e.g. number of decoding iterations), but doesn't affect the output time from the system.

As a result, the use of the proposed parallel flexible decoder architecture allows a scheduling algorithm (performed by the scheduler) to implement the following key advantages with respect to the serial flexible architecture:
1) Introducing flexibility between the number of active decoding units (e.g. LDPC decoders) and the achievable coding gain, which allows to trade power versus coding gain by individually switching off the decoding units;
2) Minimizing power consumption and silicon area by localizing processing in each decoding unit and minimizing data routing.

It is therefore appreciated that the proposed parallel flexible decoder can be applied to iterative FEC codes (e.g. LDPC codes), reducing the number of processing in the decoder by employing flexible decoding units capable having a variable number of iterations for each information data block. This advantage can eliminate power waste coming from unnecessary processing in case only a low number of iterations is necessary to decode a data block (e.g. an information block) but only very few blocks exceptionally require a high number of iterations. The proposed decoder architecture provides an efficient decoding scheme with low power consumption as well as capable of adapting to different system performance requirements by trading off processing power versus error correction capabilities (e.g. coding gain).

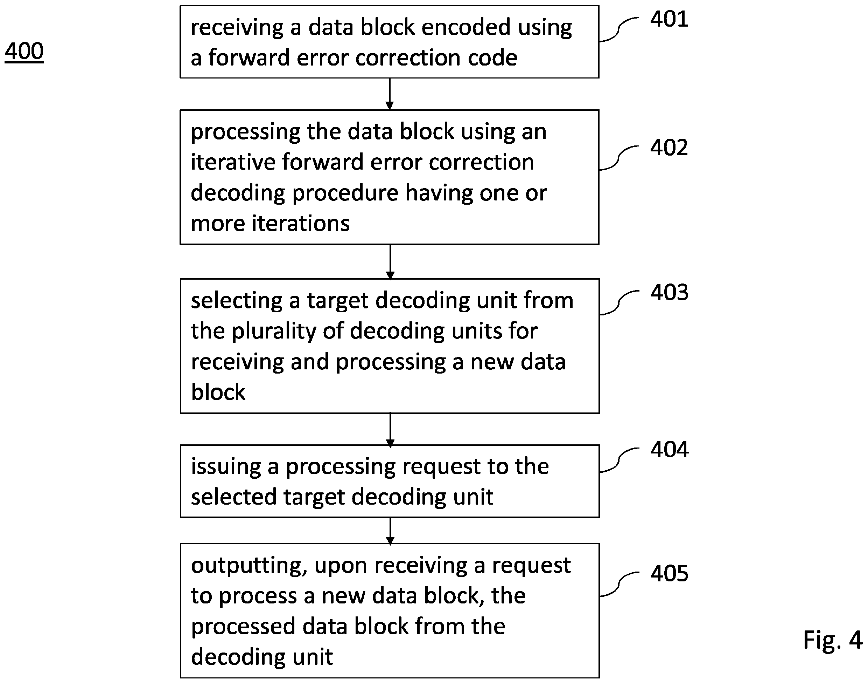

**Fig. 4** illustrates processing steps for the proposed decoding method according to embodiments of the disclosure. The method **400** can be implemented at a FEC decoder, for example, the above mentioned decoder **300**. The method **400** comprises receiving (step **401**), at a decoding unit of a plurality of decoding units arranged in parallel, a data block encoded using a forward error correction code. The method **400** also comprises processing (step **402**), at the decoding unit, the data block using an iterative forward error correction decoding procedure having one or more iterations. The method **400** comprises selecting (step **403**) a target decoding unit from the plurality of decoding units for receiving and processing a new data block. Furthermore, the method **400** comprises issuing (step **404**) a processing request to the selected target decoding unit. The method **400** also comprises outputting (step **405**), upon receiving the request to process a new data block, the processed data block from the decoding unit. The processed data block may be output from the decoding unit to a reassembly queue for reassembling the data block order such that the output order of the processed data blocks remains the same as the transmission order of the data blocks.

It should be noted that the device features described above correspond to respective method features that may however not explicitly be described, for reasons of conciseness. The disclosure of the present document is considered to extend also to such method features.

Accordingly, the proposed decoding method employs a number of parallel flexible decoding units jointly operated in a load-balancing configuration. Processing in the parallel decoding units is managed by, for example, a scheduling algorithm which allocates processing resources to information blocks as required to achieve a target BER minimizing both the number of active parallel decoding units and the processing in each decoding unit.

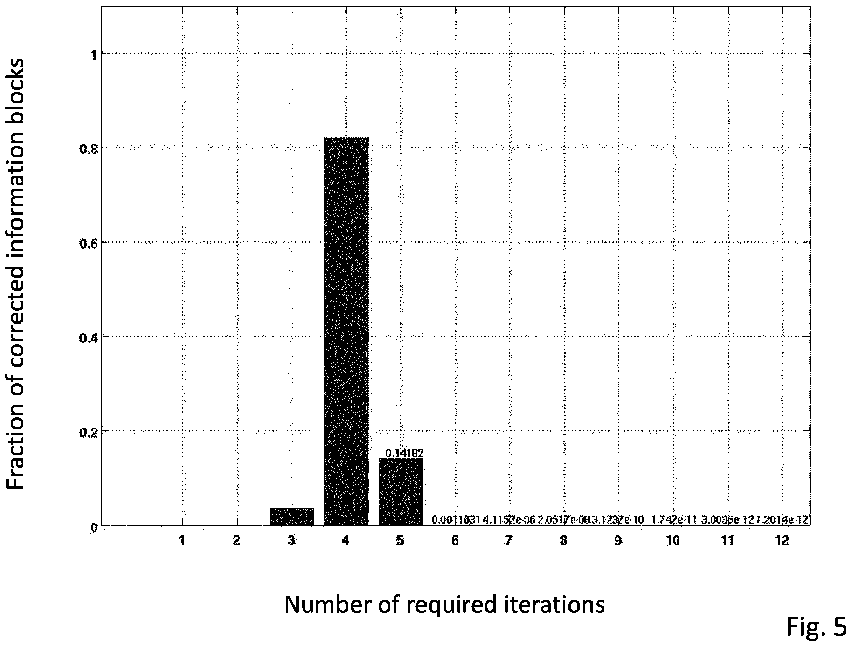

To assess the performance benefit of the proposed decoding architecture, a floorless regular LDPC code with rate r=0.8 and block length N=30720 was chosen. This code can correct errors with output BER < 10⁻¹⁵ at a SNR value of 2.6 dB by means of a soft iterative decoder (e.g. a LDPC decoder). **Fig. 5** graphically illustrates a histogram showing fraction of corrected information data blocks versus number of required iterations for the LDPC code under consideration (at an SNR level around 2.6dB). As illustrated, after the first and second iterations, almost all data blocks still contain errors. At the subsequent iterations (e.g. up to the twelfth iteration in the histogram of **Fig. 5**), a very low number of data blocks remain to be corrected. One can observe that data blocks requiring more than 5 iterations are in the range of 0.1%. However, 12 cascaded iterations are necessary to correct all the data blocks for the required output BER performance (e.g. for a target BER < 10⁻¹²).

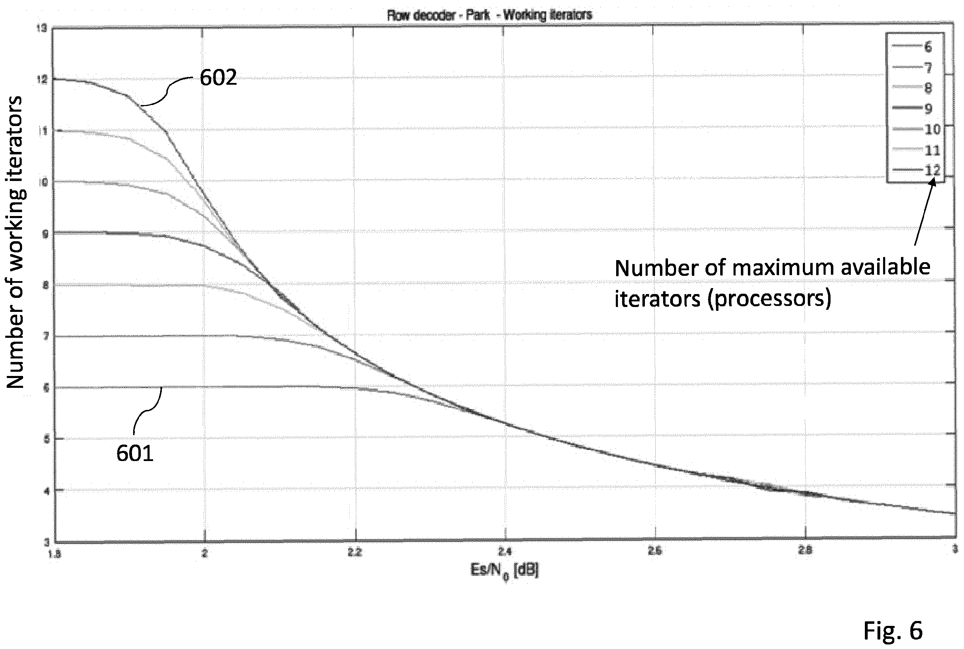

**Fig. 6** graphically illustrates a simulation result of the average number of working processors as a function of the Eₛ/Nₒ (an indication of SNR value) using the proposed decoder architecture according to embodiments of the disclosure. The curves indicate the corresponding results for different numbers of maximum available processors (iterators) in the decoder. Curve **601** represents the required number of iterators (processors) over varying SNR values with the maximum number of available processors in the decoder equal to 6. Curve **602** represents the required number of processors over varying SNR values with the maximum number of available processors in the decoder equal to 12. One can observe that the number of required processors for achieving the maximum coding gain decreases along with increasing SNR values. As illustrated, the maximum number of required parallel processors is less than 6 at SNR of 2.6 dB, while the maximum number of required parallel processors increases up to 12 processors at SNR of 1.8dB. In other words, using a decoder architecture with 6 available processors, all the 6 processors are occupied for the correction process (in the working mode) when SNR is below 2.2dB, as indicated by curve **601.** On the other hand, using a decoder architecture with 12 available processors, all the 12 processors are occupied for the correction process (in the working mode) when SNR is 1.8dB, as indicated by curve **602.**

Typically, a decoding system is adapted to given operating conditions such as an expected SNR of a transmission line. As mentioned above, the statistical nature of the iterative decoding procedure, which results in a variable number of required decoding iterations on the data blocks, is addressed by the proposed adaptive decoding scheme with a dynamic number of active decoding units depending on the transmission quality. The system having illustrated simulation results shown in Fig. 6 could for example be designed to operate for an expected SNR of 2.4. At that point, about 5 decoding units (iterators) are active on average. If the line conditions are better than expected and the encountered SNR is higher, the average number of active processors is reduced which saves significantly consumed power. On the other hand, if the line conditions deteriorate and the SNR drops, the decoding system operates in a state where all the available processors are active all the time (see left side of Fig. 6 with the horizontal curves indicating full exploitation of all available resources). Nevertheless, the iterative decoding process of data blocks will be interrupted before finishing error free decoding as the data blocks are timed out when reaching the total decoder latency and new data blocks arrive and must be assigned to the decoding units. Thus, for low SNR values, a significant number of blocks with residual errors remain and are output by the decoder.

For example, for a system designed to operate at specific conditions, there is always a SNR below which the correction capability is not sufficient even if all the decoding units are active. Thus, residual errors, more or less rare, will be present causing the service to be not acceptable. In order to reduce power consumption of the decoding system in such low SNR condition and avoid excessive heat production in the processors, the number of available processors for selection by the scheduler can be controlled based on a measured line condition or an average number of active processors in a sliding time window.

In embodiments, the proposed decoding scheme can be extended to avoid excessive heat production and power consumption by measuring the long term activity (or average number of active units) and kept the available number of decoding units under control by a supervisor unit. The supervisor unit will inform the scheduler on how many decoding units can be used for decoding by applying the following rules
- If the average number of active units exceeds a given first threshold, the number of available units will be incrementally reduced.
- If the average number of active units is below a given second threshold, the number of available units will be incrementally increased.

In this way, the average power consumption of the decoding system is limited, also when the SNR is very low, while short peaks of activity are allowed. The above average operation may be on a sliding window having a size of e.g. 1 to 10 seconds. Thus, only longer activity peaks or valleys will trigger a control operation of the supervisor unit. The first threshold and the second threshold may be the same number of active decoding units, or different numbers depending on design parameters.

As a result, the proposed decoding configuration allows for a significant reduction of number of required decoding instances (e.g. LDPC decoders) which is the main contribution to silicon complexity, and also provides a very sharp waterfall region in the BER-versus-SNR curve. Consequently, the overall decoder power consumption can be decreased. For example, the proposed parallel decoding scheme in **Fig. 3** applying 6 LDPC decoding units can reach similar overall decoder output BER performance compared to the serial scheme which needs 12 iterators. In order to reach a certain BER performance, the required processing power is reduced down to 50% using the proposed parallel decoding scheme compared to the serial scheme. Moreover, the proposed decoding scheme can dynamically adapt the number of active parallel iterators (decoding units) as a function of the operating SNR to save processing power, which can be achieved by switching off iterators for applications where the target SNR is reduced.

It is thus appreciated that the proposed decoding device and method allows to trade processing power versus coding gain by individually switching off decoding units/processors thereof. Besides, the proposed decoding scheme can remove the complex queue buffer required by the serial configuration for managing the access to the flexible iterator. The proposed decoding scheme further minimizes power consumption and silicon area by localizing processing in each decoding unit and minimizing data routing, which may be applicable for integrating a high-speed decoder (e.g. 400Gb/s) in a single chip device with compelling area and power consumption constraints. Accordingly, the proposed decoding scheme can enable efficient high-speed decoder implementation at a network element, e.g. in a 100G Metro coherent receiver module.

The functions of the various elements shown in **Fig. 3**, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context. In embodiments, some of above functions may be implemented by optical signal processing.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

It should be further noted that the description and drawings merely illustrate the principles of the proposed apparatus and method. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A forward error correction decoder (300) to receive data transmitted through a channel of a transmission system, the decoder comprising:
a decoding stage (301) including a plurality of decoding units (301₁ - 301₈) arranged in parallel, each of the decoding units configured to:
receive a data block encoded using a forward error correction code; and
process the received data block using an iterative forward error correction decoding procedure, each of the decoding units being able to apply a variable number of decoding iterations to process individual data blocks; and
a scheduler (302) configured to select one of the decoding units from the plurality of decoding units for receiving and processing a new data block, and to issue a processing request to the selected one of the decoding units.

2. The decoder of claim 1, further comprising a reassembly queue (303) to receive the processed data block output from the one of the decoding units to reassemble the data block order.

3. The decoder of claim 1 or 2, wherein the scheduler is able to select the one of the decoding units based on an arrival time of a corresponding previously-received data block processed by the decoding units.

4. The decoder of claim 1, wherein the scheduler is able to select the one of the decoding units based on an operating status of the decoding units, the operating status including a working mode and an idle mode.

5. The decoder of claim 4, wherein one of the decoding units starts operating in the working mode responsive to being selected to process a new data block and/or starts to operate in the idle mode after processing a data block therein.

6. The decoder of any of the previous claims, wherein the iterative forward error correction code comprises a low-density-parity-check code.

7. The decoder of any of the previous claims, wherein the number of the decoding units available for the selecting by the scheduler is adapted based on a moving average of the number of active ones of the decoding units.

8. A decoding method for implementing forward error correction to data received by a decoder (300) after transmission through a channel, the data including a plurality of data blocks encoded using a forward error correction code, the decoder including a plurality of decoding units (301₁ - 301₈) arranged in parallel, the method comprising:
by a scheduler (302), selecting one of the decoding units for receiving and processing one of the data blocks and issuing a request to the selected one of the decoding units to process the one of the data block; at the one of the decoding units receiving the one of the data blocks; and
at the one of the decoding units, processing the one of the data blocks using an iterative forward error correction decoding procedure.

9. The decoding method of claim 8, wherein the forward error correction code comprises a low-density-parity-check code.

10. The decoding method of claim 8 or 9, further comprising outputting the processed one of the data blocks from the one of the decoding units to a reassembly queue (303) to reassemble the data block order.

11. The decoding method of claim 10, wherein each of the decoding units is able to process individual data blocks with a variable number of iterations of a forward error correction decoding procedure.
